Europäisches Patentamt

European Patent Office

Office européen des brevets

(11) Publication number: **0 487 792 A1**

# EUROPEAN PATENT APPLICATION

(21) Application number: 90312820.5

(22) Date of filing: 26.11.90

(51) Int. Cl.⁵: **G01J  1/50**, A63F 3/06

(43) Date of publication of application:
**03.06.92 Bulletin  92/23**

(84) Designated Contracting States:
**AT BE CH DE DK ES FR GB GR IT LI LU NL SE**

(71) Applicant: **PATENT INNOVATIONS LIMITED**
**16-18 Vicarage Road**
**Kingston-upon-Thames, Surrey KT1 1OB(GB)**

(72) Inventor: **Pugh, Robert John**
**6 Windsor Road**
**Kew, Richmond, Surrey(GB)**
Inventor: **Frost, Paul**
**110 Exmouth Road**
**South Ruislip, Middlesex(GB)**

(74) Representative: **Barlow, Roy James et al**
**J.A. KEMP & CO. 14, South Square, Gray's**
**Inn**
**London WC1R 5LX(GB)**

(54) **Ultra-violet light detector.**

(57)  This invention provides a cheap, single and easy to construct disposable UV light-sensitive device comprising one or more areas of UV light-sensitive ink(s), which changes from colorless to coloured on exposure, applied to a support and initially protected from exposure to UV light by a removable cover. A second ink of a primary colour associated with the UV sensitive initially colourless ink thus causes a change to a different colour upon exposure of the UV sensitive ink. The invention may be applied to UV light detectors which can give a rapid indication of theintensity of incident UV light, optionally divided into wavelength bands. The invention may also be used to provide a secure promotional game.

This invention relates to detectors of ultra-violet light, particularly ultra-violet light in sunlight.

Many methods of UV detection and measurement have been developed in the past.

These range from opto/electronic instruments to liquid crystal based detectors which change colour with temperature. The former are high precision and costly whilst the latter detectors rely on measuring the temperature rise of the device and attempting to correlate this temperature rise (caused by incident infrared radiation) with the UV component of the incident radiation by a colour change, typically from Red - Green - Blue. Clearly no correlation can be obtained when, for example, the ambient temperature is high and the incident radiation from the sun is low (cloudy conditions, humid conditions atmospheric pollution).

Also the accuracy of this device is highly dependent on ambient temperature as it is essentially a temperature measuring device. Furthermore the liquid crystal performance/life is degraded by the action of UV light which results in a radical change of temperature profile and eventual destruction of the temperature/colour change i.e. no colour change with temperature is visible after exposure to UV light. All in all Liquid Crystal is totally incompatible with the use of UV detection.

Inks and emulsions which are sensitive to UV radiation have been used in the printing industry in many applications.

For example an emulsion containing diazo type dyes is trough coated onto silk screens and dried. A positive (or negative film) is then placed against the emulsion and exposed to very high intensity UV rays from a UV lamp. The areas in which the UV rays impinge upon the emulsion become hard and water insoluble. The unexposed area corresponding to the positive or negative remains soft and therefore water soluble. On washing the screen the water soluble image is removed leaving areas through which printing inks can pass. Similarly metal plates can be etched for offset litho application and printed circuit board electronic applications.

According to the present invention there is provided a UV light-sensitive device comprising:- a support; at least one area on an external surface of said support, bearing an ink which changes colour upon exposure of the ink to UV light; and cover means, opaque to UV light, provided so as to prevent exposure of said at least one area of ink to UV light, said cover means being arranged such that said at least one area may be exposed to UV light if desired, characterised in that said ink is transparent before exposure to UV light and becomes coloured on exposure; and in that a second ink is associated with the first mentioned ink and contrasts with the colour of the first mentioned ink to emphasize the change undergone by the UV-sensitive first mentioned ink.

Possible embodiments for such a UV light-sensitive device include use as a UV light detector in which the colour change upon exposure to UV light indicates the presence or intensity of UV light falling on the device. In this case the degree of colour change may indicate the intensity of the incident radiation. Alternatively several areas of differing sensitivity may be provided and which, if any, undergo a colour change upon exposure to UV light may indicate the intensity of the UV light. Partially transparent UV filters of differing transmission values may be used to enable indication of the intensities of UV light in particular regions of the spectrum.

Another possible embodiment for the UV light-sensitive device according to the present invention is as a secure form of a promotional game in which the player selects a limited number of areas from a larger number provided and removes a cover from them to reveal a number of symbols. Certain combinations of symbols revealed qualify the player for a prize. UV light-sensitive inks placed under the cover, or used to print the symbols, allow easy detection of tampering with the device.

In either of the above embodiments the support may be made of a suitable sheet material, either opaque or transparent, such as paper, card, plastic, sheet metal etc., depending on the application. The removable cover may be a peel off layer or a layer of another ink which may be scraped off. The cover might also comprise a light-tight wrapper.

The first aspect of the present invention therefore provides a cheap, easy to use disposable UV light measuring device/detector which may be adapted to detect/measure various intensities of incident radiation at various wavelength ranges with an appropriate sensitivity and hence provides an UV light detector which may be adapted for a wide variety of uses.

The present invention will be further described hereinafter by way of detailed description of exemplary embodiments with reference to the accompanying drawings in which:-

FIGURE 1 is a cross-section of a first embodiment of an UV light detector incorporating an UV light-sensitive device according to the present invention;

FIGURE 2 is a plan view of the detector of Figure 1;

FIGURE 3 is a cross-section of a second embodiment of an UV light detector according to the present invention;

FIGURES 4a, 4b, 5a and 5b show the method of operation of an UV light detector according to the present invention;

FIGURES 6a and 6b are plan views of a card for a promotional game embodying the present invention;

FIGURE 7 is a plan view of a third embodiment of a UV light detector according to the present invention;

FIGURE 8 is a front view of a disposable "camera" type UV light detector according to the present invention;

FIGURE 9 is a cross-section of the UV light detector of Figure 8;

FIGURE 10 is a top view of an electronic "camera" type UV light detector according to the present invention; and

FIGURE 11 is a cut-away view of the UV light detector of Figure 10 showing its internal construction.

In the drawings like numerals denote like parts.

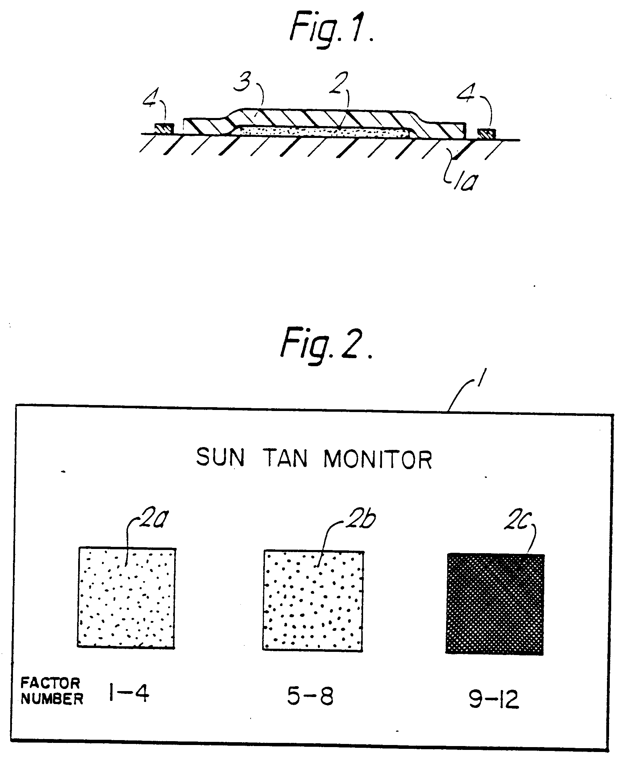

Figure 1 shows, in cross-section, a first embodiment of an UV light detector according to the present invention. The UV light-sensitive device forming this detector comprises: (i) an opaque support 1a, which may, for example, be made of paper, card, board, plastic or the like; (ii) an UV sensitive ink 2, and (iii) an opaque removable cover 3. Numeral 4 denotes other printing/decorations which may be applied to the support.

Figure 2 shows the same detector in plan with the cover 3 removed. This detector has three areas of differing sensitivity 2a, 2b and 2c. The area 2a is the most sensitive to UV light and the area 2c the least.

The decoration and instructions may be applied by any suitable printing method. The UV light-sensitive areas are applied by silk screening appropriate inks onto the support. The different sensitivities may be achieved by using different formulations of inks. Alternatively UV screening filters of different transmission values may be applied over areas of the same ink concentration in order to give the areas differing sensitivities to UV light. The opaque removable layer 3 is then laminated over the top of the UV-sensitive ink areas in order to prevent accidental exposure to light before the detector is to be used.

This detector can be used to measure the intensity of the incident UV light as follows:- The user removes the opaque removable layer 3 and holds the device in the general direction of the sun for a count of ten seconds. The factor of sun tan oil to be used is then read off from adjacent the highest numbered square which has changed colour. The detector is then disposed of.

The detector works as follows:-

In weak sunlight only a small amount of UV light falls on the detector in the period during which it is exposed. This may only be sufficient to change the colour of the most sensitive area of diazo ink, i.e. the area 2a, labelled Factor 1-4 (i.e.

the lowest numbered area); hence the user is told that the sun is weak and he or she may use a low factor sun tan oil without fear of burning. If however the sun is very strong then even the least sensitive area 2c of diazo ink, labelled Factor 9-12, will change colour and the user is urged to use a strong sun tan oil. In Figure 2 areas 2a and 2b have changed colour while area 2c has not, indicating that the user should apply a sun tan oil Factor 5-8.

Adhesive may be applied to the rear of the detector, i.e. under the support 1a, to enable it to be attached to the user's skin or another object.

Alternative uses include a detector with inks of much lower sensitivity which the user sticks to his body or places face up on the ground nearby and which changes colour after a predetermined cumulative amount of UV light has fallen on it thereby warning the user to turn over or get out of the sun before he/she burns.

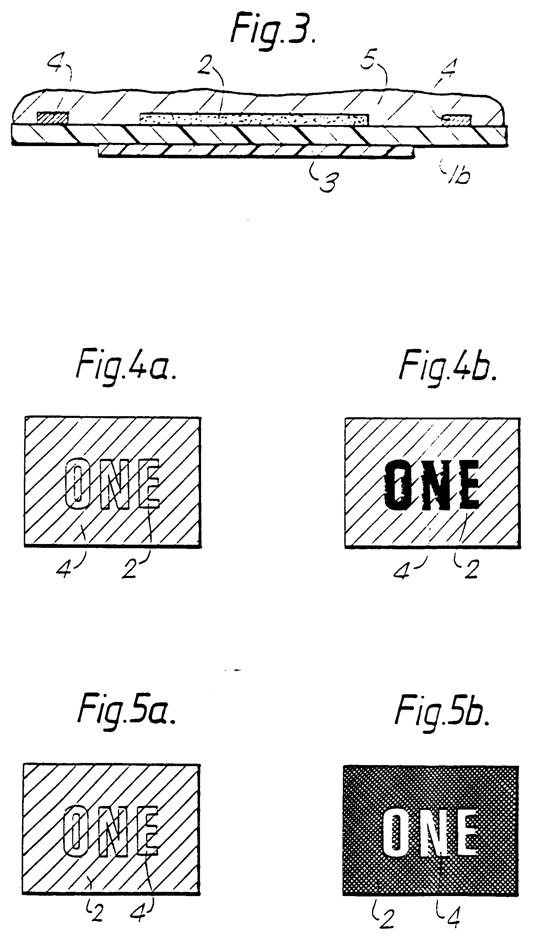

The second embodiment, shown in Figure 3 is particularly useful in the latter application.

In this second embodiment the support 2b is transparent and an adhesive layer 5 is applied over the top of the UV-sensitive ink 2. The removable layer 3 is provided on the opposite side of the support from the UV sensitive inks. If desired, the adhesive 5 may be opaque or an extra opaque layer may be provided on the opposite side of the UV-sensitive inks from the support 1b. The adhesive 5 may be of a moisture-activated type or an extra, releasable, backing layer may be provided.

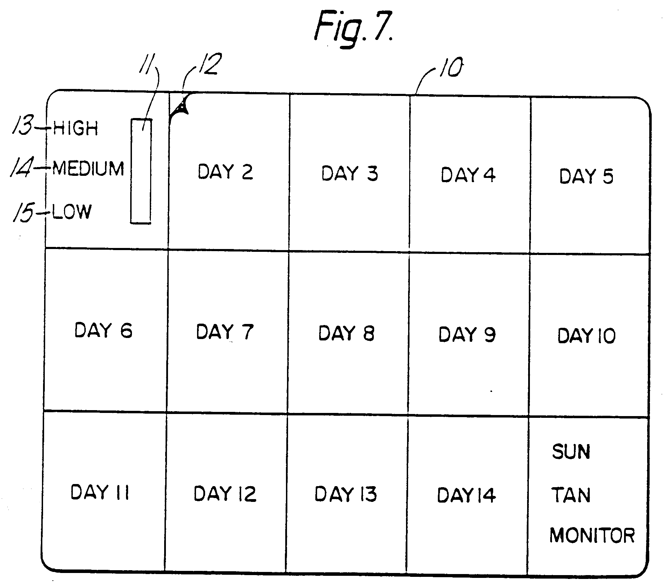

A third embodiment of a UV light detector is shown in Figure 7. This embodiment consists of a, possibly credit card sized, support 10 which is divided into a plurality of sections, corresponding to days of a holiday. Each section is initially covered by a removable cover 12 which may be printed on. In Figure 7 one of the covers has been removed revealing an area of UV light sensitive ink 11 and printed markings 13, 14 and 15. The UV light sensitive ink may be one, the degree of whose colour change is indicative of the amount of UV light that has fallen on it. The printed markings 13, 14 and 15 are coloured dark brown, mid-brown and yellow respectively. One diazo type UV light sensitive ink 11 is initially yellow and gradually turns to dark brown as the intensity of UV light increases. A table of skin colour or type versus UV light intensity is printed on the reverse of the detector and is consulted to determine the suggested sun tan oil factor.

Diazo type inks can be sensitive to UV light having a wavelength of up to 400 n.m.

By including a colour filter or filters in the transparent support of the second embodiment, or by putting them between the UV-sensitive ink and removable layer in the first embodiment, information may be obtained about the intensities of various portions of the UV spectrum.

A further use for a detector embodying the present invention might be to place it inside a container for sensitive documents, an unexposed or undeveloped film etc. This would enable a rapid visual check as to whether the contents had been exposed to daylight.

A particularly preferred form of UV-sensitive ink comprises an ethylcellulose-based or nitrocellulose-based ink which, upon exposure to UV light, changes from transparent to coloured form. Such an ink can readily be used in association with colour change-enhancing means, for example an ink which is initially coloured and which is sufficiently translucent to allow the light reflected off the support under the colour change-enhancing ink to indicate a secondary colour contrasting much more strongly with the initial primary colour of the colour change-enhancing ink than does the final colour of the UV-sensitive ink contrast with the transparent initial colour.

One example of this possibility comprises applying to an adhesive substrate "MC90" obtainable from Fasson Corporation an ink of trichromatic yellow normally used in a four colour printing process and therefore sufficiently translucent to reflect back strongly through the UV-sensitive ink which is subsequently applied over the yellow. The UV-sensitive ink layer in this case comprises ink ZYA 13, obtainable from the Sericol Group, and when deposited on a white substrate progressively changes from colorless to trichromatic magenta coloration on exposure to UV light. This cellulose-based or nitrocellulose-based ink ZYA 13 thus gives rise to a bright red final colour on combination with the trichromatic yellow underlayer, and the total colour change from yellow to red of the two layers is much more striking than the change from colorless to magenta of the ZYA 13 ink used alone.

Similarly the device can be made to change from yellow to red by the addition of a trichromatic yellow dye to the nitrocellulose based ZYA 13 ink. This allows a one pass production stage rather than printing yellow and then the cellulose based ZYA 13.

Furthermore the plurality of colour changes can be made by including different shades of dye and/or printed substrate e.g. a blue trichromatic dye or printed substrate would change from blue to purple when the ZYA 13 changed from colorless to trichromatic magenta.

The use of a cellulose UV-sensitive ink produces a device which is mechanically strong e.g. does not scratch off, and is impermeable to moisture and sun tan oils. Typical cellulose bases are Colorstar and Tristar manufactured by the Sericol Group.

A variation of the above use of trichromatic theory/ZYA 13 is that a full colour image can be formed by achromatically scanning the picture to be produced.

The UV-sensitive inks are then dyed in the trichromatic colours and printed over the substrate in a series of half tones e.g. yellow/magenta/blue. The use of a black ink is omitted and colour balance corrected at the scanning stage so that only the three trichromatic colours are used yellow/magenta/blue.

Thus a hidden picture or logo can be printed which appears only after exposure to UV rays or sunlight.

The coated substrate can be cut into any suitable shape as desired.

By printing information in a UV-sensitive ink onto a background similar in colour to the unexposed ink, a hidden message effect can be obtained. In Figure 4a the word "one" has been printed in a diazo ink 2 onto a background of matching colour and is therefore not visible. After exposure to UV light, Figure 4b, the ink has changed colour and the word is now revealed. In Figures 5a and 5b it is the background which is printed in a UV-sensitive ink 2 and the word is in a normal ink of matching colour. After exposure the UV-sensitive ink changes colour to reveal the word, which has not changed colour.

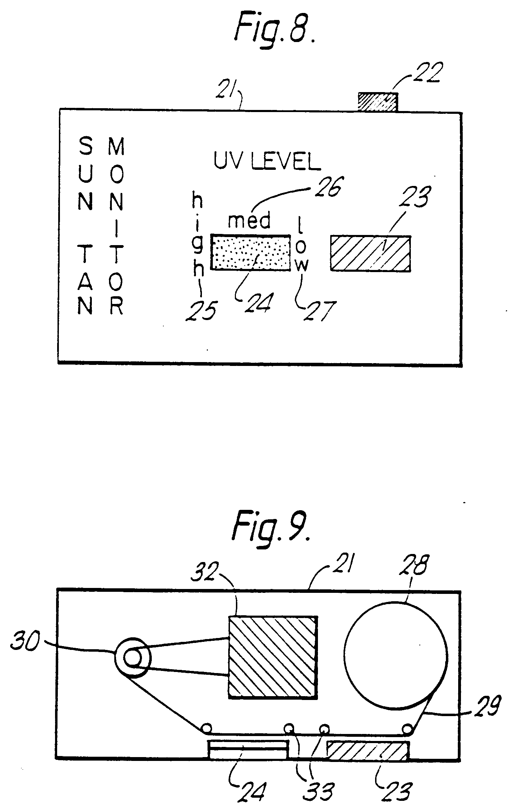

Figure 8 shows a disposable "camera" type UV detector embodying the present invention. Externally the UV "camera" consists of a case 21, a push button 22, a shutter 23, a viewing aperture 24 and indicator markings 25, 26 and 27. Logos, instructions or other decoration may also be applied to the case. The operation of this device is simple and similar in essence to that of previously described embodiments. The user points the shutter 23 in the general direction of the sun and presses the push button 22. This causes the shutter mechanism to open the shutter 23 for a predetermined period of time, in the region of a few seconds (for example 5). When the shutter closes the exposed tape area of a paper is advanced so that it appears in the viewing aperture. The user compares the colour of the exposed tape with the indicator markings 25, 26 and 27, which in the case of a diazo type of ink coloured dark brown, are mid-brown and yellow/light brown respectively, in order to determine the strength of UV light present. Figure 9 shows the internal construction of the UV "camera". The tape 29 has UV sensitive ink printed on it. The ink may, for example, be a diazo type ink or the above described cellulose-based ink, and the support may be a thin flexible strip of paper or plastic. The unexposed length of the tape is wound around reel 28 and the exposed length around reel 30. Pins or rollers 33 press the tape against the shutter mechanism 23 and the viewing aperture 24. A tape advance mechanism 32 is provided to wind the tape onto reel 30. The viewing aperture 24 may be covered by a sheet of glass or plastic that is opaque to UV light, to prevent further exposure of the tape, but transparent to visible frequencies to allow inspection of the colour of the exposed tape.

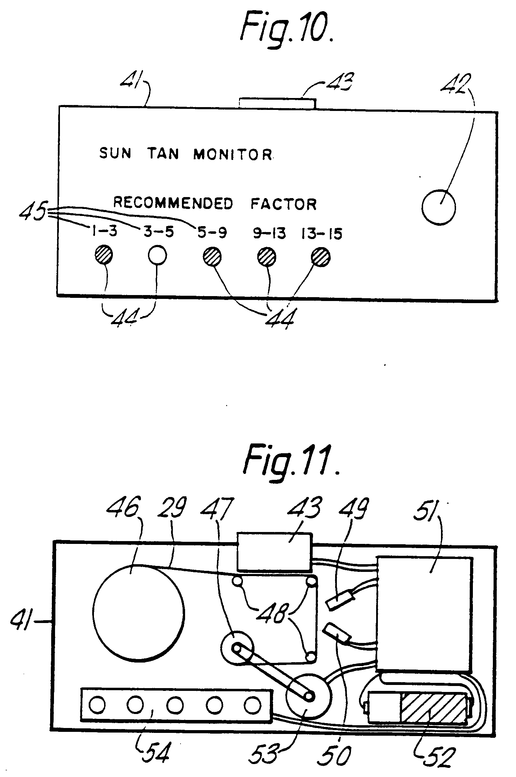

Figure 10 shows a more accurate electronic version of the "camera" type UV detector embodying the present invention. This device is even simpler to operate than the disposable UV "camera" described above. The user simply points the device in the general direction of the sun or UV source and presses the button 42. The shutter 43 opens for a preset period and shortly thereafter one of the light emitting diodes (LED's) 44 is lit indicating the strength of the incident UV radiation.

Figure 11 shows the internal structure of the electronic UV "camera". UV light sensitive tape 29, similar to that employed in the disposable UV "camera" described above is fed from an unexposed tape reel 46 to an exposed tape reel 47 via a shutter 43 light emitting diode 49 and photodetector 50, motor 53 and display board 54. Power is provided by battery 52. When the user presses the push button 42 the shutter 43 is opened for a predetermined period. After it has closed the tape is wound on so that the recently exposed portion is opposite the LED 49 and photo-detector 50. The LED 49 emits a predetermined amount of light and the photodetector measures the light reflected from the recently exposed tape. This gives an indication of the darkness of the exposed tape from which can be calculated a measure of the intensity of the UV light. This is done by the electronic circuit 51 which lights one of the diodes 44 to indicate the intensity of the UV light.

In either version of the UV "camera" filters may be placed over the aperture in order to obtain information about the intensity of portions of the UV spectrum.

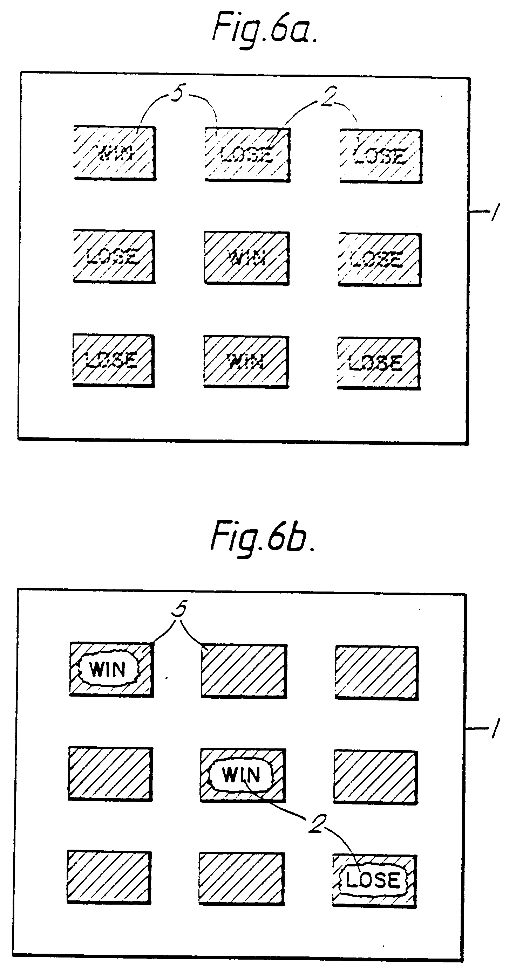

The present invention may also be used in promotional games where the player rubs ink off a predetermined number of areas, chosen from a larger number, to reveal symbols which determine whether he/she wins or loses. Figures 6a and 6b show such a game embodying the present invention. Symbols "win" and "lose" are printed in a predetermined pattern in a UV-sensitive ink 2 on a card 1. The symbols are then covered with a layer of opaque ink 5 which may be scratched or rubbed off. The player then scratches or rubs the opaque layer off from three areas chosen from the member provided.

The UV-sensitive inks then develop slowly in the ambient light to reveal the symbols. If three "win" symbols are revealed the player wins a prize.

In some such games it is possible to cheat by rubbing off the opaque layer from all the areas and then covering up the "lose" symbols to give the appearance that the three "win" symbols were correctly found at the first attempt. With the present invention this is prevented because subsequent removal of the opaque layers of the remaining areas for validation purposes would reveal that the symbols underneath had already been developed indicating that the opaque covering thereon was not original.

With this embodiment of the device, any UV-sensitive ink may be used.

## Claims

1. A UV light-sensitive device comprising:- a support; at least one area on an external surface of said support, bearing an ink which changes colour upon exposure of the ink to UV light; and cover means, opaque to UV light, provided so as to prevent exposure of said at least one area of ink to UV light, said cover means being arranged such that said at least one area may be exposed to UV light if desired, characterised in that said ink is transparent before exposure to UV light and becomes coloured on exposure; and in that a second ink is associated with the first mentioned ink and contrasts with the colour of the first mentioned ink to emphasize the change undergone by the UV-sensitive first mentioned ink.

2. A UV light detector according to claim 1, characterised in that the colorless UV-sensitive ink changes to magenta on exposure to UV light.

3. A UV light detector according to claim 2, characterised in that said UV-sensitive ink is a cellulose-based ink code No. ZYA 13, available from the Sericol Group.

4. A UV light detector according to claim 2 or claim 3, characterised in that said second ink is of a primary colour and is sufficiently translucent to provide for formation of a secondary colour resulting from the passage of reflected light through both said UV-sensitive ink and said second ink.

5. A UV light detector according to claim 4, characterised in that said second ink is of trichromatic yellow, whereby the initial colour of said at least one area is trichromatic yellow and the final colour is red.

6. A UV light-sensitive device according to any preceding claim, characterised in that an adhesive is provided so that the device may be adhered to a surface of another object.

7. An UV light detector according to claim 6, characterized in that a plurality of areas of said ink is provided, said areas changing colour upon exposure to differing predetermined amounts of UV light.

8. A UV light detector according to claim 6 or 7, characterised in that said ink is initially the same colour as areas of the support near it and changes to a contrasting colour upon exposure to a predetermined amount of UV light thereby revealing a symbol or message.

9. A card for a game, comprising an UV sensitive device according to any one of claims 1 to 6, characterised in that said removable cover is a further ink, applied over said UV light-sensitive ink, which may be scraped off.

10. A UV light detecting apparatus comprising: a UV light sensitive device according to any one of claims 1 to 8, characterized in that said cover means comprises a box-like structure with an aperture covered by openable and closable shutter means, said aperture being provided so that UV light may be incident on at least a part of said at least one area of ink when said shutter means are open, said apparatus further comprising measuring means for measuring the colour of at least a part of said at least one area of ink and thereby measuring the amount of UV light that has been incident on said at least a part of said at least one area.

11. A UV light detecting apparatus according to claim 10, characterized in that said measuring means comprise a light emitting diode arranged so as, in use, to illuminate said exposed area of ink, a photo-detector arranged so as to detect light from said light emitting diode reflected off said exposed area of ink, electronic circuitry responsive to said photo-detector for calculating a measure of the intensity of UV light, and signalling means for signalling said measure to a user.

# Fig.1.

# Fig.2.

SUN TAN MONITOR

FACTOR NUMBER | 1−4 | 5−8 | 9−12

## Fig.3.

## Fig.4a.

## Fig.4b.

## Fig.5a.

## Fig.5b.

## Fig.6a.

## Fig.6b.

# Fig.7.

| | | | |
|---|---|---|---|
| 13—HIGH<br>14—MEDIUM<br>15—LOW | DAY 2 | DAY 3 | DAY 4 | DAY 5 |
| DAY 6 | DAY 7 | DAY 8 | DAY 9 | DAY 10 |
| DAY 11 | DAY 12 | DAY 13 | DAY 14 | SUN<br>TAN<br>MONITOR |

## Fig.8.

## Fig.9.

# Fig.10.

SUN TAN MONITOR

RECOMMENDED FACTOR

| 1–3 | 3–5 | 5–9 | 9–13 | 13–15 |

# Fig.11.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 325 863 (DEPALMA)<br>* abstract *<br>* page 7, line 9 - line 11 *<br>* page 8, line 38 - line 47 *<br>* page 9, line 3 - line 17 *<br>* page 10, line 57 - page 11, line 18 *<br>* page 12, line 11 - line 13 *<br>* page 12, line 18 - line 23 *<br>* page 12, line 33 - line 35 *<br>* figures 1-6 *<br>--- | 1,2,4-8 | G01J1/50<br>A63F3/06 |
| Y | US-A-2 046 409 (PLISHKER)<br>* page 1, left column, paragraph 1 *<br>* page 1, left column, paragraph 4 *<br>* page 2, line 11 - line 26 *<br>* figure 2 *<br>--- | 1,2,4-8 | |
| A | US-A-2 083 675 (VILLE)<br>* page 1, left column, paragraph 1 *<br>* page 1, right column, line 20 - line 51 *<br>* figures 1,2 *<br>--- | 1,8 | |
| A | EP-A-0 287 386 (SERICOL)<br>* column 1, paragraph 1 -paragraph 2 *<br>* column 1, line 63 - column 2, line 16 *<br>--- | 9 | TECHNICAL FIELDS SEARCHED (Int. Cl.5 )<br><br>G01J<br>A63F<br>A61N<br>G01N |
| A | US-A-3 001 886 (SHREWSBURY)<br>* column 1, paragraph 5; figure 2 *<br>--- | 9 | |
| A | FR-A-0 379 810 (DECOUDUN)<br>* page 2, line 1 - line 25; figures 2-4 *<br>--- | 10,11 | |
| A | US-A-3 728 081 (BIDANSET)<br>* column 6, line 1 - line 7; figure 2 *<br>--- | 10,11 | |
| A | US-A-4 428 050 (PELLEGRINO)<br>* abstract *<br>----- | 10,11 | |

The present search report has been drawn up for all claims

| Place of search | Date of completion of the search | Examiner |
|---|---|---|
| THE HAGUE | 12 JULY 1991 | THOMAS R.M. |

EPO FORM 1503 03.82 (P0401)